(19) **Europäisches Patentamt European Patent Office Office européen des brevets**

(11) **EP 4 567 674 B1**

(12) **EUROPEAN PATENT SPECIFICATION**

(45) Date of publication and mention
of the grant of the patent:
**28.01.2026 Bulletin 2026/05**

(21) Application number: **24215114.0**

(22) Date of filing: **25.11.2024**

(51) International Patent Classification (IPC):
**G06N 3/063** (2023.01)    **G06N 3/0985** (2023.01)
**G06N 3/045** (2023.01)    G06N 3/048 (2023.01)
**G06N 3/0495** (2023.01)

(52) Cooperative Patent Classification (CPC):
**G06N 3/063; G06N 3/045; G06N 3/0985;**
G06N 3/048; G06N 3/0495

(54) **OPTIMAL DEPLOYMENT OF TRANSFORMER MODELS FOR HIGH PERFORMANCE INFERENCE ON FIELD PROGRAMMABLE GATE ARRAY (FPGA)**

OPTIMALER EINSATZ VON TRANSFORMATORMODELLEN FÜR HOCHLEISTUNGSINFERENZ AUF EINEM FELDPROGRAMMIERBAREN GATE-ARRAY (FPGA)

DÉPLOIEMENT OPTIMAL DE MODÈLES DE TRANSFORMATEUR POUR INFÉRENCE HAUTE PERFORMANCE SUR UN RÉSEAU PRÉDIFFUSÉ PROGRAMMABLE PAR L'UTILISATEUR (FPGA)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.12.2023 IN 202321083523**

(43) Date of publication of application:
**11.06.2025 Bulletin 2025/24**

(73) Proprietor: **Tata Consultancy Services Limited Maharashtra (IN)**

(72) Inventors:
• **Krishnan, Ashwin**
  **400607 Thane, Maharashtra (IN)**
• **Nambiar, Manoj Karunakaran**
  **400607 Thane, Maharashtra (IN)**
• **Nanjundaswamy, Madan Yelandur**
  **400607 Thane, Maharashtra (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(56) References cited:
• **PLAGWITZ PATRICK ET AL: "TRAC: Compilation-Based Design of Transformer Accelerators for FPGAs", 2022 32ND INTERNATIONAL CONFERENCE ON FIELD-PROGRAMMABLE LOGIC AND APPLICATIONS (FPL), IEEE, 29 August 2022 (2022-08-29), pages 17 - 23, XP034294652, DOI: 10.1109/ FPL57034.2022.00015**

**Description**

CROSS-REFERENCE TO RELATED APPLICATIONS AND PRIORITY

The present application claims priority to Indian application no. 202321083523, filed on December 07, 2023.

TECHNICAL FIELD

The disclosure herein generally relates to hardware accelerators, and, more particularly, to a method and system for optimal deployment of transformer models for high performance inference on Field Programmable Gate Array (FPGA).

BACKGROUND

Transformer-based models are a type of artificial neural network architecture that has significantly improved the performance of various natural language processing tasks. The rapid proliferation of transformer models, such as Generative Pre-trained Transformers (GPT) and Bidirectional Encoder Representations from Transformers (BERT), has revolutionized the landscape of artificial intelligence applications, extending their reach beyond natural language processing into the realms of vision and beyond.

As the demand for real-time, low-power, and low-latency processing surges, the challenge lies in the efficient deployment of transformer-based models on edge computing devices like Field Programmable Gate Array (FPGAs). Another benefit of using Field Programmable Gate Array (FPGAs) is its scalability where multiple FPGAs could be connected in a pipeline to deploy a large model. Although FPGAs are good candidates for low-power applications, the development cost in terms of the number of hours required for coding and deploying is huge compared to that of a central processing unit (CPU) or a graphics processing unit (GPU).

Several existing implementations of transformer models in FPGA exist which leveraged BCM (block-circulant matrix) techniques for model compression and accelerated computations. However, a limitation of this approach is the necessity to apply BCM compression during the training phase. In contrast, other implementations have adopted a versatile modular design encompassing multiple computation units of common operations found in transformer models, including matrix multiplication, SoftMax, and normalization which are scheduled as required. While this design allows the deployment of various language models without design alterations, it does introduce performance trade-offs. P. Plagwitz, F. Hannig and J. Teich, "TRAC: Compilation-Based Design of Transformer Accelerators for FPGAs," in 2022 32nd International Conference on Field-Programmable Logic and Applications (FPL), Belfast, United Kingdom, 2022, pp. 17-23, doi: 10.1109/FPL57034.2022.00015, presents a novel compiler called TRAC as well as a library of operators and modules for implementing transformer accelerators on FPGAs.

SUMMARY

Embodiments of the present disclosure present technological improvements as solutions to one or more of the above-mentioned technical problems recognized by the inventors in conventional systems. For example, in one embodiment, a method for optimal deployment of transformer models for high performance inference on Field Programmable Gate Array (FPGA) is provided. The method includes receiving by a template curator and compiler executed via one or more hardware processors, a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models, and (v) at least one of a singular feedback mode and a non-feedback mode for the one or more transformer-based models; constructing, by the template curator and compiler executed via the one or more hardware processors, a plurality of parameterized transformer model templates using the received plurality of input parameters, wherein the plurality of parameterized transformer model templates comprises of a parameterized latency function and a resource utilization function; receiving by an optimizer executed via the one or more hardware processors, each of the plurality of parameterized transformer model templates, one or more configurations corresponding to one or more Field Programmable Gate Arrays (FPGAs) and a last template signal, and wherein the last template signal refers to a signal associated with a last template from the plurality of parameterized transformer model templates; assigning via the one or more hardware processor, one or more values to each of a plurality of parameters comprised in the plurality of parameterized transformer model templates to obtain a plurality of optimal parameters from the optimizer, using at least one of: (i) the parameterized latency function, which is used as a cost function by the optimizer; and (ii) the resource utilization function along with the received one or more configurations corresponding to the plurality of Field Programmable Gate Arrays (FPGAs), wherein the resource utilization function and the one or more configurations corresponding to the one or more Field Programmable Gate Arrays (FPGAs) are used as resource constraints by the optimizer for minimizing the latency on implementing the plurality of parameterized transformer model templates on one or more Field Programmable Gate Arrays (FPGAs) for achieving a maximum throughput; feeding, to a final template selector executed via the one or more hardware processors, the plurality of optimal parameters pertaining to each of the plurality of parameterized transformer model templates; and obtaining, by the final template selector executed via the one or more hardware processors, an optimal template having maximum performance in terms of a low latency and the maximum throughput, from each of the plurality of parameterized transformer model templates.

In another aspect, there is provided a system for optimal deployment of transformer models for high performance inference on Field Programmable Gate Array (FPGA). The system comprises: a memory storing instructions; one or more communication interfaces; and one or more hardware processors coupled to the memory via the one or more communication interfaces, wherein the one or more hardware processors are configured by the instructions to: receive, by a template curator and compiler, a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models, and (v) at least one of a singular feedback mode and a non-feedback mode for the one or more transformer-based models. The system further includes constructing, by the template curator and compiler, a plurality of parameterized transformer model templates using the received plurality of input parameters, wherein the plurality of parameterized transformer model templates comprises of a parameterized latency function and a resource utilization function; receiving by an optimizer, each of the plurality of parameterized transformer model templates, one or more configurations corresponding to one or more Field Programmable Gate Arrays (FPGAs) and a last template signal, and wherein the last template signal refers to a signal associated with a last template from the plurality of parameterized transformer model templates; assigning one or more values to each of a plurality of parameters comprised in the plurality of parameterized transformer model templates to obtain a plurality of optimal parameters from the optimizer, using at least one of: (i) the parameterized latency function, which is used as a cost function by the optimizer; and (ii) the resource utilization function along with the received one or more configurations corresponding to the plurality of Field Programmable Gate Arrays (FPGAs), wherein the resource utilization function and the one or more configurations corresponding to the one or more Field Programmable Gate Arrays (FPGAs) are used as resource constraints by the optimizer for minimizing the latency on implementing the plurality of parameterized transformer model templates on one or more Field Programmable Gate Arrays (FPGAs) for achieving a maximum throughput; feeding, to a final template selector, the plurality of optimal parameters pertaining to each of the plurality of parameterized transformer model templates; and obtaining, by the final template selector, an optimal template having maximum performance in terms of a low latency and the maximum throughput, from each of the plurality of parameterized transformer model templates.

In yet another aspect, there are provided one or more non-transitory machine-readable information storage mediums comprising one or more instructions which when executed by one or more hardware processors cause receiving by a template curator and compiler a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models, and (v) at least one of a singular feedback mode and a non-feedback mode for the one or more transformer-based models; constructing, by the template curator and compiler, a plurality of parameterized transformer model templates using the received plurality of input parameters, wherein the plurality of parameterized transformer model templates comprises of a parameterized latency function and a resource utilization function; receiving by an optimizer, each of the plurality of parameterized transformer model templates, one or more configurations corresponding to one or more Field Programmable Gate Arrays (FPGAs) and a last template signal, and wherein the last template signal refers to a signal associated with a last template from the plurality of parameterized transformer model templates; assigning one or more values to each of a plurality of parameters comprised in the plurality of parameterized transformer model templates to obtain a plurality of optimal parameters from the optimizer, using at least one of: (i) the parameterized latency function, which is used as a cost function by the optimizer; and (ii) the resource utilization function along with the received one or more configurations corresponding to the plurality of Field Programmable Gate Arrays (FPGAs), wherein the resource utilization function and the one or more configurations corresponding to the one or more Field Programmable Gate Arrays (FPGAs) are used as resource constraints by the optimizer for minimizing the latency on implementing the plurality of parameterized transformer model templates on one or more Field Programmable Gate Arrays (FPGAs) for achieving a maximum throughput; feeding, to a final template selector, the plurality of optimal parameters pertaining to each of the plurality of parameterized transformer model templates; and obtaining, by the final template selector, an optimal template having maximum performance in terms of a low latency and the maximum throughput, from each of the plurality of parameterized transformer model templates.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary title system for optimal deployment of transformer models for high performance inference on Field Programmable Gate Array (FPGA), according to some embodiments of the present disclosure.

FIG. 2 is a functional block diagram of the system for optimal deployment of transformer models for high performance inference on Field Programmable Gate Array (FPGA), according to some embodiments of the present disclosure.

FIGS. 3A and 3B are flow diagrams illustrating the steps involved in the method for optimal deployment of transformer models for high performance inference on Field Programmable Gate Array (FPGA), according to some embodiments of the present disclosure.

FIG. 4 illustrates a template for a feed forward neural network in conjunction with the method for optimal deployment of transformer models for high performance inference on Field Programmable Gate Array (FPGA), according to some embodiments of the present disclosure.

FIGS. 5A and 5B illustrates a template 1 for a self-attention network in conjunction with the method for optimal deployment of transformer models for high performance inference on Field Programmable Gate Array (FPGA), according to some embodiments of the present disclosure.

FIGS. 6A and 6B illustrates a template 2 for a self-attention network in conjunction with the method for optimal deployment of transformer models for high performance inference on Field Programmable Gate Array (FPGA), according to some embodiments of the present disclosure.

FIG. 7 illustrates a template 4 for a self-attention network in conjunction with the method for optimal deployment of transformer models for high performance inference on Field Programmable Gate Array (FPGA), according to some embodiments of the present disclosure.

FIG. 8 illustrates a template for a SoftMax network in conjunction with the method for optimal deployment of transformer models for high performance inference on Field Programmable Gate Array (FPGA), according to some embodiments of the present disclosure.

FIGS. 9A and 9B illustrates a template for a layer normalization in conjunction with the method for optimal deployment of transformer models for high performance inference on Field Programmable Gate Array (FPGA), according to some embodiments of the present disclosure.

FIGS. 10A through 10D illustrates a template for an architecture datapath in conjunction with the method for optimal deployment of transformer models for high performance inference on Field Programmable Gate Array (FPGA), according to some embodiments of the present disclosure.

FIG. 11 is a functional block diagram of a GPT-2 (Generative Pre-trained Transformer 2) for testing the proposed model of optimal deployment of transformer models for high performance inference on Field Programmable Gate Array (FPGA), according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

The present disclosure provides a system and method for optimal deployment of transformer models for high performance inference on Field Programmable Gate Array (FPGA). A template curator and compiler module of the disclosed method receives various templates specific to one or more blocks of one or more transformer models and constructs a plurality of parameterized transformer model templates. Further the present method assigns one or more values to each of a plurality of parameters comprised in the plurality of parameterized transformer model templates to obtain a plurality of optimal parameters from the optimizer using a parameterized latency function and a resource utilization function along with the received one or more configurations corresponding to the plurality of Field Programmable Gate Arrays (FPGAs). Finally, an optimal template having maximum performance in terms of a low latency and a maximum throughput is obtained using a final template selector module.

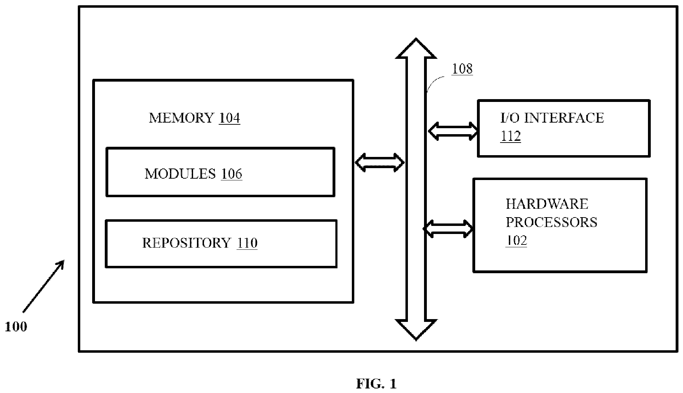

Referring now to the drawings, and more particularly to FIG. 1 through 11, where similar reference characters denote corresponding features consistently throughout the figures, there are shown preferred embodiments and these embodiments are described in the context of the following exemplary system and/or method.

FIG. 1 illustrates an exemplary system for optimal deployment of transformer models for high performance inference on Field Programmable Gate Array (FPGA), according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

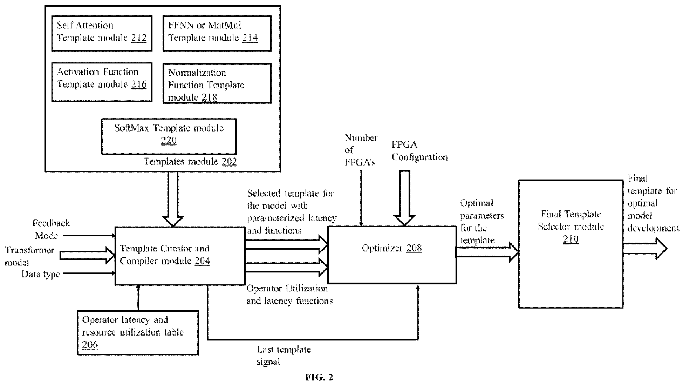

The plurality of modules 106 include programs or coded instructions that supplement applications or functions performed by the system 100 for secured accessing of resources based on user's assurance level. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for optimal deployment of transformer models for high performance inference on Field Programmable Gate Array (FPGA). In an embodiment, the modules 106 include a templates module 202 (shown in FIG. 2), a template curator and compiler module 204 (shown in FIG. 2), an operator latency and resource utilization table 206 (shown in FIG. 2), an optimizer 208 (shown in FIG. 2) and a final template selector module 210 (shown in FIG. 2). The templates module 202 further includes a self-attention template module 212, a FFNN (feedforward neural network) or MatMul template module 214, an activation function template module 216, a normalization function template module 218 and a SoftMax template module 220. In an embodiment, FIG. 2 is a functional block diagram of the system for optimal deployment of transformer models for high performance inference on Field Programmable Gate Array (FPGA), according to some embodiments of the present disclosure.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

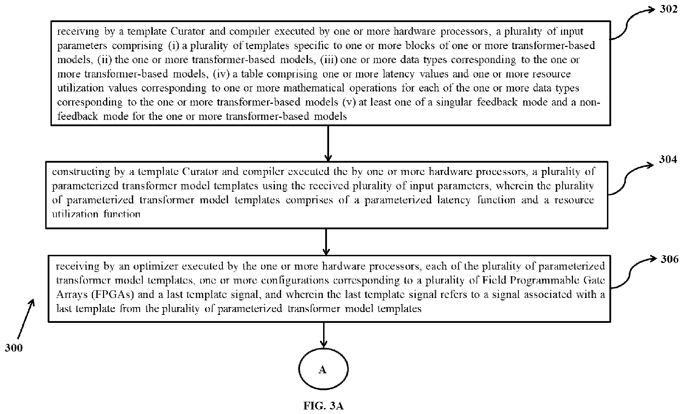

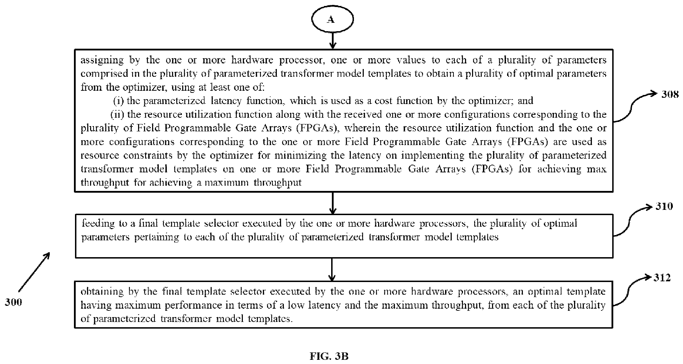

FIGS. 3A and 3B are flow diagrams illustrating a method for optimal deployment of transformer models for high performance inference on Field Programmable Gate Array (FPGA) using the systems 100 of FIGS. 1-2, according to some embodiments of the present disclosure. Steps of the method of FIG. 3 shall be described in conjunction with the components of FIG. 2. At step 302 of the method 300, the template curator and compiler module 204 executed via the one or more hardware processors 102 receives a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models (v) at least one of a singular feedback mode and a non-feedback mode for the one or more transformer-based models. The plurality of templates comprises a plurality of self-attention templates (represented by self-attention template module 212), a plurality of FFNN or MatMul (Feed Forward Neural Network or Matrix Multiplication) templates (represented by FFNN or MatMul Template module 214), a plurality of activation function templates (represented by activation function template module 216), a plurality of normalization function templates (represented by normalization function template module 218), and a plurality of SoftMax templates (represented by SoftMax template module 220). Further the one or more transformer-based models comprises of data specific to the one or more transformer-based models including total number of attentions heads, one or more encoder stages, one or more decoder stages, an embedding dimension, a context length, a type of normalization and a type of activation function used. Furthermore, the one or more blocks of the one or more transformer-based models comprise of a self-attention block, a normalization block, an activation block, a feed forward neural network block and a SoftMax block.

At step 304 of the method 300, the template curator and compiler module 204 executed by the one or more hardware processors 102 constructs a plurality of parameterized transformer model templates using the received plurality of input parameters, wherein the plurality of parameterized transformer model templates comprises of a parameterized latency function and a resource utilization function. The operator latency and resource utilization table 206 includes a table comprising one or more latency values and one or more resource utilization values corresponding to one or more mathematical operations for each of the one or more data types corresponding to the one or more transformer-based models. Herein the one or more mathematical operations refers to addition, subtraction, multiplication, division, square root, exponential operations, and the like. Further, the operator latency and resource utilization table 206 can be a single table containing latency values and resource utilization values like Table. 2 or it could be more than one table like latency table, LUT utilization table, DSP utilization table etc.

At step 306 of the method 300, the optimizer 208 executed by the one or more hardware processors 102 receives each of the plurality of parameterized transformer model templates, one or more configurations corresponding to one or more Field Programmable Gate Arrays (FPGAs) and a last template signal. The last template signal refers to a signal associated with a last template from the plurality of parameterized transformer model templates.

At step 308 of the method 300, the optimizer 208 executed by the one or more hardware processors 102 assigns one or more values to each of a plurality of parameters comprised in the plurality of parameterized transformer model templates to obtain a plurality of optimal parameters from the optimizer, using the parameterized latency function and the resource utilization function along with the received one or more configurations corresponding to the one or more Field Programmable Gate Arrays (FPGAs). The parameterized latency function is used as a cost function to minimize the overall latency or minimize the latency of the slowest block for high throughput using the optimizer 208. This is done by assigning values to the parameters which allocate corresponding resource. Further the resource utilization function and the one or more configurations corresponding to the one or more Field Programmable Gate Arrays (FPGAs) are used as resource constraints by the optimizer 208 for minimizing the latency on implementing the plurality of parameterized transformer model templates on one or more Field Programmable Gate Arrays (FPGAs) for achieving max throughput.

At step 310 of the method 300, the one or more hardware processors 102 feed the plurality of optimal parameters pertaining to each of the plurality of parameterized transformer model templates.

At step 312 of the method 300, the final template selector module 210 executed by the one or more hardware processors 102 obtains an optimal template having maximum performance in terms of a low latency and the maximum throughput, from each of the plurality of parameterized transformer model templates.

Field Programmable Gate Array (FPGAs) are recognized for their ability to support deep pipelines due to their data-path oriented computing approach. A FPGA device serves as programmable silicon responsible for implementing the intended functionality. This involves a grid of logic blocks, including Look-up Table (LUT) arrays, Block RAMs (BRAM), Ultra RAMs (URAM), Digital Signal Processors (DSPs), and Flip-flops (FFs), interconnected and interfaced through programmable connections and I/Os. Boards like Alveo U280 (known in art), boasts an impressive hardware configuration with over 9,000 DSPs, 2,607,000 registers, 45MB of on-chip SRAM (which includes both BRAMs and URAMs, collectively known as SRAMs), 16GB of DDR, and 8GB of HBM (High-Bandwidth Memory). It is important to note that these memory resources can be partitioned, allowing for random parallel access to each partition, which contrasts with the more streamlined memory access found in GPU's HBM. Specifically, the BRAMs can be partitioned into 4,032 banks, each with a capacity of 18KB, while URAMs support up to 960 banks, each with 36KB capacity, favoring parallel lookups. Furthermore, this FPGA architecture supports 34 parallel lookups from the 32-port HBM banks (256MB per bank) and the 2-port DDR DRAM (Double Data Rate Dynamic Random Access Memory) banks (8GB per bank). The average latency for various memory architectures when fetching the initial set of data bytes is detailed in Table 1 for reference. The HBM and DDR could perform burst operations which means that after the initial latency, remaining bytes (limited by page size) could be fetched in consequent clock cycles. For, to fetch 320B of data from HBM, it would take 55 + ((320 - 32)/32) = 64 clock cycles. Here, in one clock cycle, 32Bytes of data are transferred.

Table 1. Average latency of various Memory Blocks [cite HeteroRec++]

| | Memory | | | |
|---|---|---|---|---|
| | BRAM | URAM | HBM | DDR |
| Latency (in clock cycles) | 2 | 2 | 55 | 27 |
| Bits Transferred/clock | 36b | 72b | 32B | 64B |
| Total Capacity | 9MB | 35MB | 8GB | 32GB |

Table 1 depicts an average latency for various memory architectures when fetching the initial set of data bytes.

As mentioned in earlier sections, transformer-based models are a type of artificial neural network architecture that has significantly improved the performance of various natural language processing tasks. They rely on self-attention mechanisms to process input data in parallel, making them highly efficient. Transformers have become the foundation for state-of-the-art models like Bidirectional Encoder Representations from Transformers (BERT), Large Language Model Meta AI (LLaMA), and Generative Pre-trained Transformers (GPT), enabling tasks such as language understanding, text generation, and machine translation with remarkable accuracy. Transformer-based models consist of two primary components: an encoder and a decoder. These components work in tandem to process input data and generate output sequences. Additionally, they rely on a crucial mechanism known as self-attention.

Self-Attention: Self-attention is a fundamental component of transformers. Self-attention calculates a weighted representation of all the words in the input sequence for each word. This means that each word's representation considers the information from all other words in the sequence. The weights for this calculation are learnt during training, allowing the transformer-based models to assign higher importance to relevant words and lower importance to less relevant ones. Self-attention is what enables transformer-based models to capture the relationships between words and understand the context of a word in the context of the entire sequence. In summary, transformer-based models use encoders to process input data, self-attention to understand word relationships, and decoders to generate output sequences. These components, especially self-attention, have been pivotal in advancing the field of natural language processing and have found applications in various domains beyond just text, including image processing and more.

The Self-attention consists of a stack of identical layers, each of which performs two main operations the encoder and the decoder which are explained below:

**Encoder:** The encoder is responsible for processing the input data. In natural language processing, this input data is usually a sequence of words or tokens. This is a critical mechanism that allows the model to weigh the importance of different words in the input sequence concerning each other. It helps the model understand the context and relationships between words in the sequence. The output of the encoder is a set of context-rich representations for each word in the input sequence.

**Decoder:** The decoder, on the other hand, is responsible for generating the output sequence. It typically starts with a special token (e.g., <start>) and predicts one token at a time. Like the encoder, the decoder also comprises multiple layers, but in addition to self-attention and feed-forward layers, it includes an extra attention mechanism over the encoder's output to consider the input context when generating the output.

Feed-Forward Neural Networks: After self-attention, the encoder and the decoder employ feed-forward neural networks to process the information further.

Table 2. Resource Utilization and Latency for FP32 operations synthesized at 200MHz.

| Operation | Latency | DSPs | LUTs |
|---|---|---|---|
| add | 2 | 2 | 220 |
| mul | 4 | 2 | 114 |
| div | 7 | 0 | 780 |
| sub | 2 | 2 | 220 |
| buff | 1 | 0 | 0 |
| exp | 2 | 7 | 746 |
| sqrt | 14 | 14 | 746 |

Table 2 depicts resource utilization and latency for FP32 operations synthesized at 200MHz. The objective of the present disclosure is to find the most optimal deployment of transformer-based models for inference in FPGA. For this purpose, as a first step the present disclosure identified individual functional blocks in transformer-based models and different pipelinable paths within individual blocks and among these blocks. Further pre-designed components (mathematical operations) comprising adders, multipliers, and functional blocks, including square root and exponential operations are leveraged to implement the circuits. Further, each of these mathematical operations are synthesized at a reference frequency of 200MHz and stored its resource utilization (Lookup Tables (LUTs and Digital Signal Processors (DSPs)) and latencies. Table 2 shows the resource utilization and latency for various floating point (FP32) operations. There is a very minor difference in latency and resource utilization with large changes in operating frequencies. Hence, 200MHz is reasonable for the purpose of modelling. Similarly, tables for other datatypes were stored. Using these data, the pipelined paths were parameterized, to estimate the performance for a given resource utilization.

Referring to FIG. 2, the templates module 202 provides the parameterized latency and resource for each of the individual functional blocks of a transformer model. The template curator and compiler module 204 picks up the individual templates along with the one or more transformer-based models and constructs the required transformer-based models that has been fed as an input. Similarly, the latency and resource utilization for each operator is picked from "The Operator latency and resource utilization table" which is essentially the Table. 2. This is based on the data type (INT8, FP32, FP16, etc.). The 'feedback mode' signal (shown in Fig. 2) indicates that the transformer model's current output depends on the previous generated output like in auto-regressive models. If the feedback mode signal is 0, it means the generation of the output sequence is done in parallel. This includes non-autoregressive models, classification models, etc. The optimizer 208 takes in the parameterized transformer model templates from the template curator and compiler module 204 which constitutes of parameterized latency and resource functions. The parameterized latency equation is used as the cost function with an objective of reducing overall latency or maximizing the throughput by reducing the latency of the slowest component. The resource utilization function is used in constraints to avoid over-utilization of the FPGA resources, the information of which is provided in the form of number of FPGAs in the system (#FPGAs) and FPGA configuration which provides the information as total number of DSPs, LUTs, etc. available in each FPGA. The optimizer 208 outputs the optimal allocation of resource for each template until the final or last template is received from the template curator and compiler module 204. The final template selector module 210 keeps the template with maximum performance and rejects the rest of the templates.

Modelling Considerations: The weights of the one or more transformer-based models (if too large to be stored in BRAM and URAM) and the input embeddings 'h' are assumed to be stored in the banks of either HBM (High Bandwidh Memory) or DDR (Dual Data Rate) memory due to their huge size. These memories incorporate an initial fetch latency of around 56 clock cycles (HBM) and 28 clock cycles (DDR). The remaining data are fetched in a burst with a burst size of 32 and 64 bytes, respectively. The burst length would depend on the total data required by the MatMul unit. Say to fetch say '$n$' weight parameters of FP32 (4 Bytes each) datatype from DDR bank would require approximately:

$$Lat_{DDR} = \lceil (n*4)/64 \rceil + 28 \text{ clock cycles} \qquad (1)$$

For HBM 64 will get replaced by 32 and 28 with 56. Herein, the terms global memory is used to represent DDR or HBM. The input embeddings '$h$' and the weights are stored in separate banks to fetch them in parallel. Deploying multiple decoder blocks across multiple FPGAs (or even in a single FPGA) is not efficient since most of the resource would be idle when the one or more transformer models require the output to be fed back (in auto-regressive mode) to the decoder to predict the next word. This implementation leads to smaller allocation of various functional blocks as well as larger idle state. It is in fact more efficient to allocate more resources to each block for faster computation. Due to this an inter-decoder/encoder pipelining across multi-FPGAs (or even in a single FPGA) is ineffective since a new input cannot be passed to the earlier decoders. The pipelined implementation of the decoders or encoder will be useful in the applications like classification or embedding generation (https://arxiv.org/pdf/2004.07180.pdf (known in the art)) where an output is not fed back. Here, with non-feedback mode model-specific architecture with inter-decoder/encoder pipelining could be more beneficial as it could achieve high throughput.

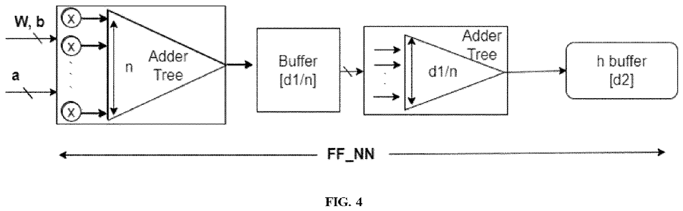

FIG. 4 illustrates a template for a feed forward neural network in conjunction with the method of FIGS. 3A-3B for optimal deployment of transformer models for high performance inference on Field Programmable Gate Array (FPGA), according to some embodiments of the present disclosure.

Feed Forward Neural Network (FFNN): The feed forward layer usually has a vector-matrix multiplication (MatMul). Here on FPGAs, input '$a$' is taken one at a time (Batch=1), hence, it is a vector instead of a 2D matrix.

$$h = aW + b \qquad (2)$$

Referring to FIG. 4, for an input $a$ of dimension 1x$d$1 and $W$ of dimension $d$1x$d$2, a set of '$n$' parallel multipliers are used followed by an adder tree with $\lceil log_2(n) \rceil$ stages and contains ($\lceil log_2(n) \rceil - 1$) adders) to perform sum of the products. Here, it is ensured that 'd1' is divisible by 'n' using constraints during optimization. If $n \neq d1$, then an extra set of adder tree with dimension $d1/n$ and a buffer to store $d1/n$ parameters are used. The bias 'b' is added using the second adder tree or simply an adder if $n = d1$

Latency: The total latency for a pipelined path can be given by L:

$$L = IL + II * (N - 1) \qquad (3)$$

*IL* is iteration latency, latency from the first set of inputs to the first set of outputs, *II* is initiation interval, the time duration after which the next set of inputs can be fed into the pipeline, *N* is the total number of inputs and *k* is the number of inputs fed into the pipeline at a time. The next step is to formulate a latency equation which would be a function of resource allocated for implementing *FFNN*. Here, *IL,* and *II* remains the same for a given architecture, latency essentially depends on the total numbers of inputs being fed to the path. The *IL* for *FFNN* can be given by:

$$IL0 = Tmul + [log_2(n)](\text{IL for parallel multiplier follower by an adder tree})$$

$$(4)$$

$$IL1 = [log_2(d1/n + 1)] * (\text{IL for parallel multiplier follower by an adder tree})$$

$$(5)$$

$$IL\_FF\_NN = IL0 + Tbuff + IL1 + Tbuff \qquad (6)$$

The *Tbuff* includes the time for both writing to and reading from the buffer. Here, total inputs *N* = d2 and the initiation interval (*II*) equals to *d1/n* if weights are stored on BRAM/URAM since next set of d1 vector could be fed after *d1/n* cycles. If the weights are stored on global memory, then *II* equals *to* $Max(\frac{d1}{n}, Lat_{global\_memory})$ from equation 1.

Here, the effective inputs *(II * (N - 1))* becomes almost double if *n = d1/2.*

**Resources:** There are 2 primary resources, namely Lookup Tables (LUTs) and DSPs, that are consumed while performing any operation. Along with them, LUTRAMs, BRAMs (Block Random Memory Access) and URAMs (Ultra-Random Memory Access) are used as buffers to store intermediate results between the pipelines. In Fig. 4, the first buffer is partitioned into 'd1/n' units or banks so that 'd1/n' many partial sums could be fetched in parallel and fed to the second Adder Tree. The number of such units or banks for the output h buffer would depend on the the numbers of simultaneous inputs the next stage requires. Hence, to generalize it, the overall memory size is kept equal to output dimension but total number of required partitions equal to the number of simultaneously parameters the next stage requires. Here, output dimension is d2. Hence, total amount of memory consumed by buffers is given by $\left(\frac{d1}{n} + d2\right) * R_{param}$. Here $R_{param}$

is the total bytes required to store a parameter. For eg: *FP32* =4 bytes, *int*8 = 1 byte. The equations to represent memory consumption are as follows:

$$R\_NN = n * R_{mul} + (n - 1) * R_{add} + (np.ceil(d1/n)) * R_{add} \qquad (7)$$

(Resource for extra adder to add bias is also included)

$$R\_NN\_mem = (d1/n + d2) * R_{param} \qquad (8)$$

Here, $R_{mul}$ and $R_{add}$ have total LUTs and DSPs required (from Table 2) to perform multiplication and addition operation. $R\_NN\_mem$ and $R\_NN$ are resource required to for implementing *NN* layer. $R_{mul}$, $R_{add}$, and $R\_NN$ can be seen as a list that stores both LUTs and DSPs consumed.

Self-Attention: Self attention is a complex operation consisting majorly of three matrix multiplications and one SoftMax operation.

$$(Q, K, V) = hW + b1 \qquad (9)$$

$$A = SoftMax(\frac{Q.K^T}{\sqrt{Embd}})V \qquad (10)$$

Before the latency and resource equations for the self-constraints are derived, few terms related to transformers are defined.

Table 3. Table Title: Parameters and Their Values

| Parameter | Definition | Value in gpt2 |
|---|---|---|
| inp_ctx | Total number of tokens in the input (or input context length) | variable |
| Max_Ctx | Maximum possible context length in the model | 1024 |
| *Embd* | Concatenated embedding dimension | 768 |
| *Heads* | Total number of heads in the model | 12 |
| PerHead | Embedding dimension per head | 64 |

Table 3 lists the parameters, their definitions, and their corresponding values. Also, provides values in grp2 taking gpt2 as an example.

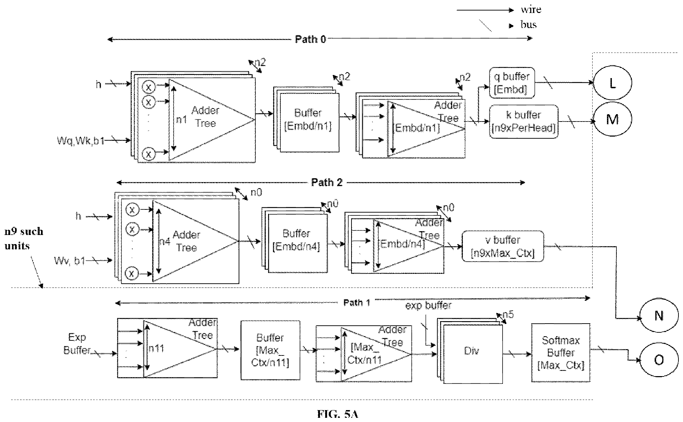

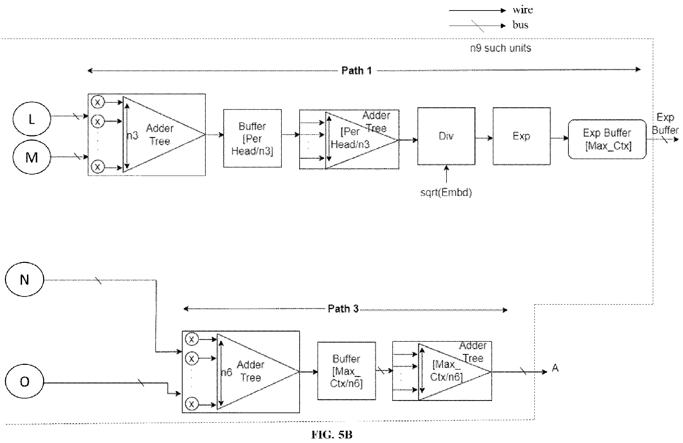

FIGS. 5A and 5B illustrates a template 1 for a self-attention network in conjunction with the method of FIGS. 3A-3B for optimal deployment of transformer models for high performance inference on Field Programmable Gate Array (FPGA), according to some embodiments of the present disclosure. In FIGS. 5A and 5B, same resource is provided to compute Q and K since, once the first row of Q is obtained, the same gets multiplied with each column of $K^T$ to obtain the first row of Q * $K^r$. Providing extra resources to Q would lead to the resource remaining idle for a long time. Instead, more resources to an individual could be provided by sharing the resources for faster processing. This is followed by logic to calculate SoftMax (in path1), the whole path is pipelined. Once, the first row of K (or column of $K^T$) is obtained in the k buffer, the computation for calculating the exponential and division by $\sqrt{Embd}$ on each element starts. Simultaneously, the second row of K could be computed. Once all the rows of K or columns of $K^T$ (least favorable scenario is *Max_ctx*) is calculated and stored in a buffer of dimension *Max_Ctx,* the actual calculation of softmax begins and obtain the first row of the term $SoftMax(\frac{Q.K^T}{\sqrt{Embd}})$ with dimension *imp_ctx* (*Max is Max_Ctx*). To maintain the pipelined flow, multiply $SoftMax(\frac{Q.K^T}{\sqrt{Embd}})$ with the first column of V of dimension *inp_ctx* (*Max is Max_ctx*), hence the columns of V in *path*0 is obtained. *Path*3 performs the multiplication of the V with the out output softmax values.

The iteration latency equations for the self-attention blocks are as follows:

$$IL1 = Tmul + \lceil log_2(n[1]) \rceil \cdot Tadd + Tbuff \qquad (11)$$

$$IL2 = \lceil log_2(\frac{Embd}{n[1]+1}) \rceil \cdot Tadd + Tbuff \text{ (\# +1 to include bias)} \qquad (12)$$

$$IL_{path0} = IL1 + IL2 \qquad (13)$$

$$IL2\_1 = Tmul + \lceil log_2(n[3]) \rceil \cdot Tadd \qquad (14)$$

$$IL3 = \lceil log_2(\frac{PerHead}{n[3]}) \rceil \cdot Tadd + Tdiv \qquad (15)$$

$$IL4 = Texp + \lceil log_2(n[11]) \rceil \cdot Tadd \qquad (16)$$

$$IL5 = \lceil log_2(\frac{Max_{Ctx}}{n[11]})\rceil \cdot Tadd + Tdiv \tag{17}$$

$$IL_{path1} = IL2\_1 + Tbuff + IL3 + Tbuff + IL4 + Tbuff + IL5 + Tbuff \tag{18}$$

$$IL_{path2} = Tmul + \lceil log_2(n[4])\rceil \cdot Tadd + Tbuff + \lceil log_2(\frac{Embd}{n[4]})\rceil \cdot Tadd \tag{19}$$

$$IL_{path3} = Tmul + \lceil log_2(n[6])\rceil \cdot Tadd + \lceil log_2(\frac{Max_{Ctx}}{n[6]+1})\rceil \cdot Tadd + Tbuff \tag{20}$$

Here, the latency would also depend on where the weights are stored (if on BRAM/URAM then *Tbuff* equals to 1 else equals to latency of global memory as seen earlier). The rule of initiation interval (*II*) remains the same. Also, since the *Path2* is in *parallel to Path0 + Path1*, therefore the overall latency depends on *Max*(*Latency to fill softmax buffer, latency to fill v buffer*). The *q* and *k* buffers require n3 * n9 partitions of each. In *path1*, total memory partitions required is (*PerHead/n3 + n*11(*for Exp_Buffer*) + *Max_Ctx/n*11 + *n*6) * *n*9. For *path2* and *path3* it is *n*6 * *n*9 and *Max_Ctx/n*6 * *n*9, respectively. Please note that the number of partitions may not always be equal to buffer size. Partitions depend on the total number of parallel inputs the subsequent block requires. The LUTs and DSPs (*R_selfattn*) required to implement the self-attention layers could be modelled using the below equations:

$$R_{path0} = (n[1] \cdot n[2] \cdot R_{mul} + ((n[1] \cdot n[2]) - 1) \cdot R_{add}) + \lceil\frac{Embd}{n[1]}\rceil \cdot R_{add} \cdot n[2] \tag{21}$$

$$R_{path1\_1} = (n[3] \cdot R_{mul} + (n[3] - 1) \cdot R_{add} + (\lceil\frac{PerHead}{n[3]}\rceil - 1) \cdot R_{add} + R_{div}) \cdot n[9] \tag{22}$$

$$R_{path1\_2} = (R_{exp} + (n[11] - 1) \cdot R_{add} + (\lceil\frac{Max_{Ctx}}{n[11]}\rceil - 1) \cdot R_{add} + n[5] \cdot R_{div}) \cdot n[9] \tag{23}$$

$$R_{path2} = n[4] \cdot n[0] \cdot R_{mul} + (n[4] - 1) \cdot n[0] \cdot R_{add} + \lceil\frac{Embd}{n[4]}\rceil \cdot R_{add} \tag{24}$$

$$R_{path3} = (n[6] \cdot R_{mul} + (n[6] - 1) \cdot R_{add} + \lceil\frac{Max\_Ctx}{n[6]} - 1\rceil \cdot R_{add}) \cdot n[9] \tag{25}$$

$$R_{selfattn} = R_{path0} + R_{path1\_1} + R_{path1\_2} + R_{path2} + R_{path3} \tag{26}$$

The memory consumed to store the intermediate results are as follows:

$$R_{\text{path0\_Mem}} = \text{n}[2] \cdot (\left\lceil \frac{\text{Embd}}{\text{n}[1]} \right\rceil . R_{param} + (\text{Embd} + (\text{PerHead} * \text{n}9)) \cdot R_{param})$$

$$(27)$$

$$R_{\text{path1\_Mem}} = \left( \left( \left\lceil \frac{\text{Per}_{\text{Head}}}{\text{n}[3]} \right\rceil \right) . R_{param} + \text{Max\_Ctx} \cdot R_{param} + \right.$$

$$\left. \left( \left( \left\lceil \frac{\text{Max\_Ctx}}{\text{n}[11]} \right\rceil \right) . R_{param} \right) \right) \cdot \text{n}[9] \qquad (28)$$

$$R_{\text{path2\_Mem}} = \left( \left\lceil \frac{\text{Embd}}{\text{n}[4]} \right\rceil \right) . R_{param} \cdot \text{n}[0] + \text{Max\_Ctx} \cdot R_{param} \qquad (29)$$

$$R_{\text{path3\_Mem}} = \left( \left\lceil \frac{\text{Max\_Ctx}}{\text{n}[6]} \right\rceil \right) . R_{param} \cdot \text{n}[9] \qquad (30)$$

$$R_{selfattn_{Mem}} = R_{\text{path0\_Mem}} + R_{\text{path1\_Mem}} + R_{\text{path2\_Mem}} + R_{\text{path3\_Mem}} \qquad (31)$$

In template 1 '$n9$' can be fixed to one since, the moment $q$ and $k$ buffers are filled, the data could be passed to the *Path*1. For the same reason the dimension of $k$ buffer is provided as *n9xPerHead* instead of *Embd*. Here, the dimension of $q$ is *Embd* (=768 values) but for $k$ it could be just *PerHead* (64 values). This is because the inputs come one by one. So, the moment *PerHead* values fill up, it is passed to the next stage.

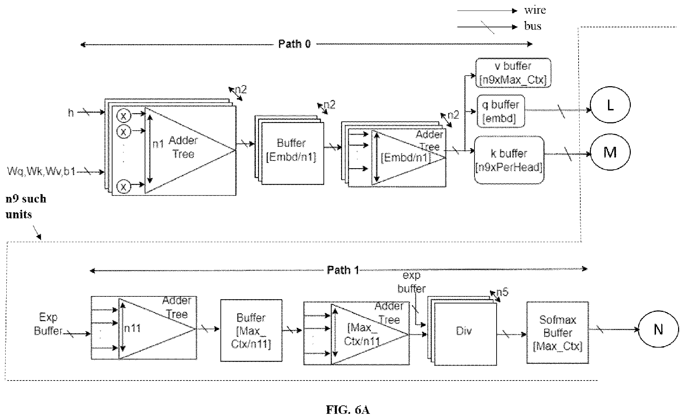

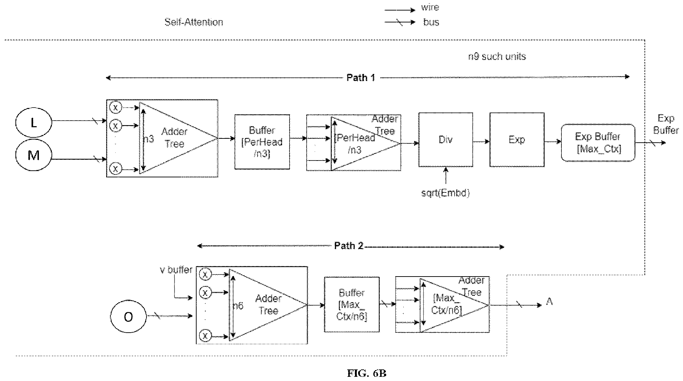

FIGS. 6A and 6B illustrates a template 2 for a self-attention network in conjunction with the method of FIGS. 3A-3B for optimal deployment of transformer models for high performance inference on Field Programmable Gate Array (FPGA), according to some embodiments of the present disclosure.

Template 2: In the previous Template (FIG. 3), a separate set of resource has been provided for 'V' calculation. This consumes extra resources. Hence, for $V$ computation, the same resource provided to compute $Q$ and $K$ are used as shown in FIGS. 6A and 6B. The iteration latency equations would be same as that of previous template (template 1) except the $IL_{path2}$ (equation 19) is omitted. Similarly, the resource for the *path2* will be ignored.

Template 3: The previous two templates (template 1 and template 2) are very efficient when feedback mode=0 since the output token is not feedback. But, in feedback mode=1, for every new token the entire set of keys and values need to be calculated again. In the previous template for every new row of $q$, $k$ and $v$ are calculated *inp_ctx* times. To avoid this $k$ and $v$ could be stored in a buffer of size *Max_Ctx*Embd*). Since BRAMs would not be sufficient to store such a huge value and hence, they are stored in global memory banks. The extra latency is incorporated in the latency equations (Equation 14 and Equation 20).

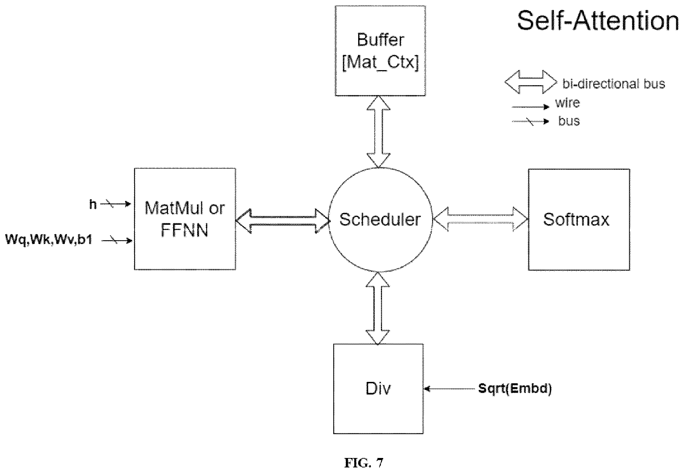

FIG. 7 illustrates a template 4 for a self-attention network in conjunction with the method of FIGS. 3A-3B for optimal deployment of transformer models for high performance inference on Field Programmable Gate Array (FPGA), according to some embodiments of the present disclosure.

Template 4: Here, the single *MatMul* block (or an FFNN block since both are matrix multiplication) is used for each and every matrix multiplication in the self attention. This will increase the initiation interval, but a huge and single *MatMul* unit could perform larger multiplications faster. Also, in previous templates (template 1, template 2 and template 3) some of the blocks could stay idle and lead to resource under-utilization. Hence, it is worth including this kind of an option as well in the overall design space.

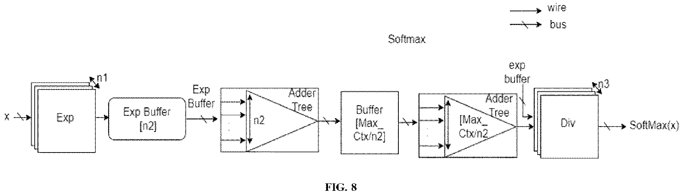

FIG. 8 illustrates a template for a SoftMax network in conjunction with the method of FIGS. 3A-3B for optimal deployment of transformer models for high performance inference on Field Programmable Gate Array (FPGA), according to some embodiments of the present disclosure. The SoftMax template is very similar to the one provided in template 1 and template 2 except here simultaneous exponential can be calculated since it is not a pipelined version. The Div unit is provided to perform division by $\sqrt{\text{Embd}}$ in Equation 10. The iteration latency and resource equations for MatMul and div are the same as discussed in previous sections. Although the scheduler will incur a small latency and consume some resources, it is ignored for modelling purposes.

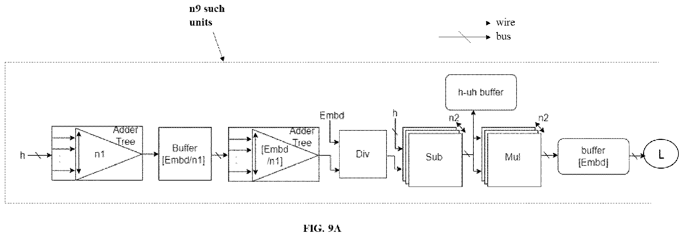

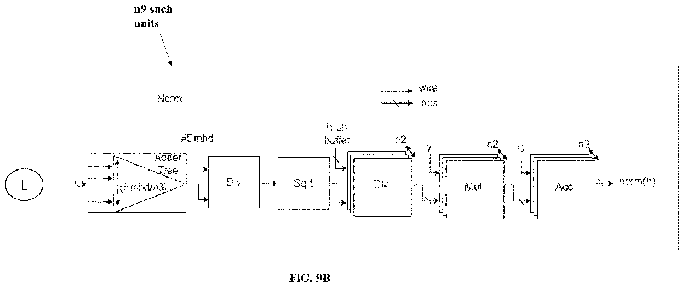

FIGS. 9A and 9B illustrates a template for a layer normalization in conjunction with the method of FIGS. 3A-3B for optimal deployment of transformer models for high performance inference on Field Programmable Gate Array (FPGA), according to some embodiments of the present disclosure.

Normalization: The normalization helps stabilize training and improves the convergence of the model. Transformers based models typically use layer normalization. The output of the Layer Norm operation has a mean of approximately zero and a standard deviation of approximately one for each dimension. The operations in the norm layer are,

$$LayerNorm(h) \ = \ \gamma \ \cdot \frac{h - \mu}{\sqrt{\sigma^2 + \epsilon}} \ + \ \beta \qquad\qquad (32)$$

where, x is the input vector. $\gamma$ and $\beta$ are learnable scaling and shifting parameters for each dimension. These parameters are used to allow the model to adapt and scale the normalized values. $\mu$ is the mean of the elements across the input vector $\sigma$ is the standard deviation of the elements across the input vector $\varepsilon$ is a small constant (usually a small positive number like 1$e$ - 5) added to the denominator for numerical stability. Similarly, the templates for other types of normalization that are sometimes used in the transformer models including a batch normalization, an instance normalization, a group normalization, and an adaptive normalization are normalization layer normalization in conjunction with the method for optimal deployment of transformer models for high performance inference on Field Programmable Gate Array (FPGA).

Activation: Various types of activations functions are used in transformer-basedmodels to introduce non-linearity into the network, allowing it to learn complex patterns and relationships within the data. Some of the activations used are: ReLU (Rectified Linear Unit), GELU (Gaussian Error Linear Unit), Swish, SELU (Scaled Exponential Linear Unit), Softmax, Tanh (hyperbolic tangent).

For eq: Gaussian error linear unit (GELU) is the activation function used in GPT-2 and has following equation:

$$\text{GELU (x)} \ \approx \frac{x}{2}(1 + tanh\sqrt{\frac{2}{\pi}}(x + 0.44715x^3)) \qquad\qquad (33)$$

The latency and resource utilization for various activation functions for the activation templates are obtained by simply synthesizing the operation as done for various operations in Table 2 since they are easy to implement. They are then stored in the activation function template module 216.

In an embodiment of the present disclosure, there are a few exploration considerations which are summarized below:

i. In multi-FPGA systems, the inter-communication latency is also being modelled and incorporated in the latency equations. For feedback mode, resource for a single encoder/decoder is being allocated across multiple FPGAs for the reason explained in modelling considerations section. For non-feedback mode, along with a single decoder across multiple FPGAs, different encoder/decoder stages being placed on across multiple-FPGAs to exploit interstage pipelining and achieve high throughput is also explored.

ii. Matrix multiplication has been shown to be implemented as in FIG. 4 which includes a parallel multiplier and an adder tree-like structure. But a systolic array could be more efficient for other data types like INT8. These are also included in the FFNN or MatMul templates.

iii. Template 4 talks about k-v caching. The proposed framework also explores partial caching where some of $k$ and $v$ matrix is cached and remaining being calculated to save memory.

iv. Since latency is the function of total inputs (*inp_ctx*) which cannot be know in prior, we adopt following strategy for feedback mode and non-feedback mode.

a) Non-Feedback mode: Since output is never fed back; it is assumed the input to be of maximum context length.
b) Feedback mode: Here, for the 1st iteration it is assumed the input context length is within {1,100,400,1000,2000}. For subsequent iterations the input size is only one. Here, total iterations are equal to *Max_Ctx - inp_ctx*. The latency is calculated with each of the input context length and then the average of their latency to be minimized is returned.

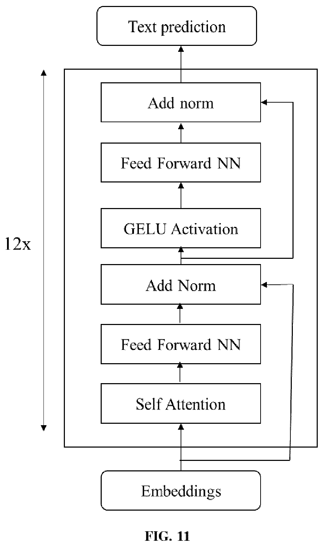

FIG. 11 is a functional block diagram of a GPT-2 (Generative Pre-trained Transformer 2) for testing the proposed model of optimal deployment of transformer models for high performance inference on Field Programmable Gate Array (FPGA), according to some embodiments of the present disclosure.

The model of the present disclosure was tested on an open source GPT-2 model. The target FPGA was selected as xilinx Alveo-U280 (known in the art). GPT-2, or Generative Pre-trained Transformer 2, represents a decoder-only natural language processing model developed by OpenAI (known in the art). GPT-2 utilizes an embedding dimension of 768, enabling the representation of words and tokens in a 768-dimensional vector space to capture semantic relationships. The present disclosure model's vocabulary encompasses 50,257 tokens, facilitating the comprehension of linguistic nuances. GPT-2 operates with a fixed context length, with the specific variant considered here, GPT-2 small, having a context window of 1024 tokens. This model of the present disclosure consists of 12 decoder blocks, resulting in a total of 125 million parameters as depicted in FIG. 11.

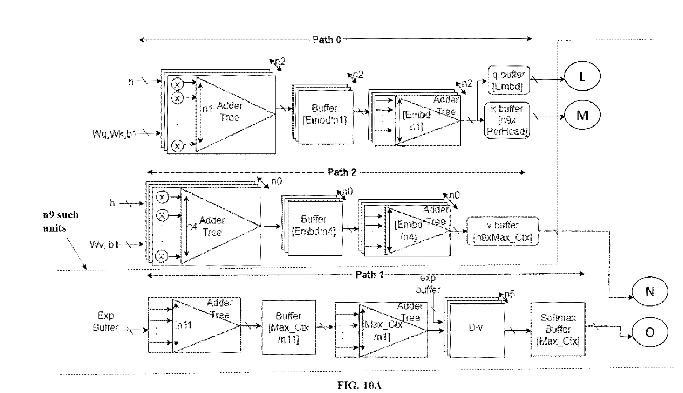

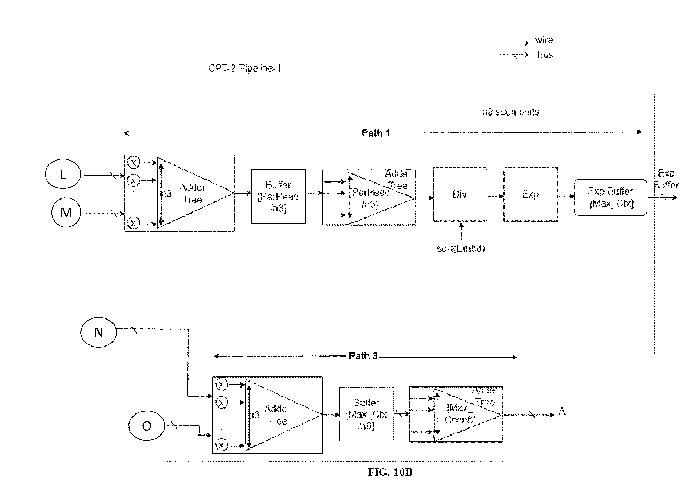

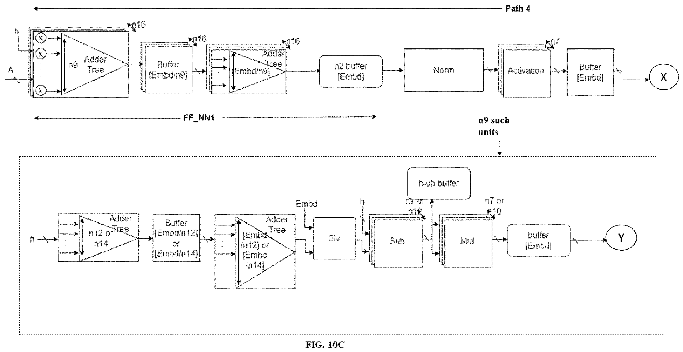

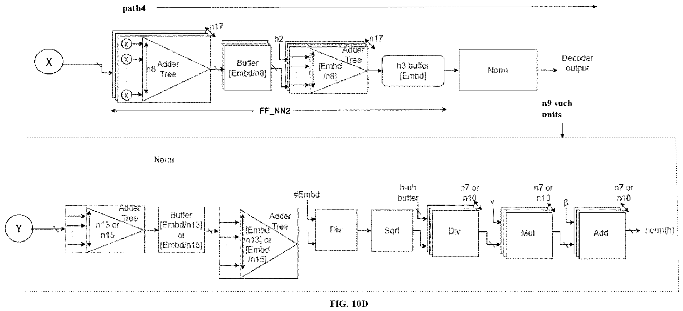

FIGS. 10A through 10D shows one of the parameterized transformer model templates generated by model curator and compiler for GPT2. The upper bound for the parameters $n0$ to $n17$ in FIGS. 10A to 10D are {Max_Ctx, Embd, Embd, PerHead, Embd, Max_Ctx, Max_Ctx, Embd, Embd, Heads, Embd, Max_Ctx, Embd, Embd, Embd, Embd, Embd//Heads, Embd}. Table 4 summarizes the inference latency to generate one token in non-feedback mode. The CPU latency is experimentally measured on 88 core with Hyper-Threading Intel(R) Xeon(R) Gold 6238M CPU @ 2.10GHz, whereas, for FPGA it is computed using the latency expressions. For both designs, a number of resources equal to that of Xilinx Alveo-U280 and a clock frequency of 100 MHz are considered.

Table 4. GPT-2 Average Inference Latencies for text generation task

|  | **CPU (88-core with Hyper-Threading)** | **Modelled result on one FPGA** |
|---|---|---|
| Latency(s) | 0.98 | 0.315 |

The latency to implement one decoder block of GTP-2 on one FPGA is 2630231 clock cycles. Thus, to implement 12 decoder blocks=31562772 clock cycles with a throughput of 3 prompts/s at 100MHz frequency. Assuming a cluster of 12 FPGAs are available, then for non-feedback mode, the overall throughput is around 33 prompts/s (the overall latency remains the same). Here, an individual decoder block resides on a single FPGA. The inter-FPGA communication latency gets hidden during the pipelined implementation. Hence, the next prompt could be sent once the 1st decoder on 1st FPGA finishes its execution (2630231 clock cycles or 0.026s).

The written description describes the subject matter herein to enable any person skilled in the art to make and use the embodiments.

The embodiments of present disclosure herein address unresolved problem of deploying the transformer-based models by optimally allocating the FPGA resource to each of the fundamental block's present in the transformer model for maximum performance in terms of low latency and high throughput. The embodiment thus provides a system and method for optimal deployment of transformer based? models for high performance inference on Field Programmable Gate Array (FPGA). Moreover, the embodiments herein further implement a modeling technique that provides an optimal deployment strategy for a given or a set of FPGAs enabling quick comparison with the central processing unit (CPU) or the graphics processing unit (GPU). Further, the present disclosure provides modeling and latency formulation techniques along with design space exploration techniques to determine the optimal partitioning of resources.

Computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

**Claims**

1. A processor implemented method (300), comprising:

    receiving (302), by a template curator and compiler executed via one or more hardware processors, a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models, and (v) at least one of a singular feedback mode and a non-feedback mode for the one or more transformer-based models;
    constructing (304), by the template curator and compiler executed via the one or more hardware processors, a plurality of parameterized transformer model templates using the received plurality of input parameters, wherein the plurality of parameterized transformer model templates comprises of a parameterized latency function and a resource utilization function;
    receiving (306), by an optimizer executed via the one or more hardware processors, each of the plurality of parameterized transformer model templates, one or more configurations corresponding to one or more Field Programmable Gate Arrays (FPGAs) and a last template signal, and wherein the last template signal refers to a signal associated with a last template from the plurality of parameterized transformer model templates;
    assigning (308), via the one or more hardware processors, one or more values to each of a plurality of parameters comprised in the plurality of parameterized transformer model templates to obtain a plurality of optimal parameters from the optimizer, using at least one of: (i) the parameterized latency function, which is used as a cost function by the optimizer, and (ii) the resource utilization function along with the received one or more configurations corresponding to the plurality of Field Programmable Gate Arrays (FPGAs), wherein the resource utilization function and the one or more configurations corresponding to the one or more Field Programmable Gate Arrays (FPGAs) are used as resource constraints by the optimizer for minimizing the latency on implementing the plurality of parameterized transformer model templates on one or more Field Programmable Gate Arrays (FPGAs) for achieving a maximum throughput;
    feeding (310), to a final template selector executed via the one or more hardware processors, the plurality of optimal parameters pertaining to each of the plurality of parameterized transformer model templates; and
    obtaining (312), by the final template selector executed via the one or more hardware processors, an optimal template having maximum performance in terms of a low latency and the maximum throughput, from each of the plurality of parameterized transformer model templates.

2. The processor implemented method as claimed in claim 1, wherein the plurality of templates comprises a plurality of self-attention templates, a plurality of FFNN (feedforward neural network) or MatMul templates, a plurality of activation function templates, a plurality of normalization function templates, and a plurality of SoftMax templates.

3. The processor implemented method as claimed in claim 1, wherein the one or more transformer-based models comprise of data specific to the one or more transformer-based models including total number of attentions heads, one or more encoder stages, one or more decoder stages, an embedding dimension, a context length, a type of normalization and a type of activation used.

4. The processor implemented method as claimed in claim 1, wherein the one or more blocks of the one or more transformer-based models comprise of a self-attention block, a normalization block, an activation block, a feed forward neural network block and a SoftMax block.

5. A system (100), comprising:

a memory (104) storing instructions;

one or more communication interfaces (112); and

one or more hardware processors (102) coupled to the memory (104) via the one or more communication interfaces (112), wherein the one or more hardware processors (102) are configured by the instructions to:

receive a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models, and (v) at least one of a singular feedback mode and a non-feedback mode for the one or more transformer-based models;

construct a plurality of parameterized transformer model templates using the received plurality of input parameters, wherein the plurality of parameterized transformer model templates comprises of a parameterized latency function and a resource utilization function;

receive each of the plurality of parameterized transformer model templates, one or more configurations corresponding to one or more Field Programmable Gate Arrays (FPGAs) and a last template signal, and wherein the last template signal refers to a signal associated with a last template from the plurality of parameterized transformer model templates;

assign one or more values to each of a plurality of parameters comprised in the plurality of parameterized transformer model templates to obtain a plurality of optimal parameters from the optimizer, using at least one of: (i) the parameterized latency function, which is used as a cost function by the optimizer, and (ii) the resource utilization function along with the received one or more configurations corresponding to one or more Field Programmable Gate Arrays (FPGAs), wherein the resource utilization function and the one or more configurations corresponding to the one or more Field Programmable Gate Arrays (FPGAs) are used as resource constraints by the optimizer for minimizing the latency on implementing the plurality of parameterized transformer model templates on one or more Field Programmable Gate Arrays (FPGAs) for achieving a maximum throughput;

feed the plurality of optimal parameters pertaining to each of the plurality of parameterized transformer model templates; and

obtain an optimal template having maximum performance in terms of a low latency and the maximum throughput, from each of the plurality of parameterized transformer model templates.

6. The system as claimed in claim 5, wherein the plurality of templates comprises a plurality of self-attention templates, a plurality of FFNN (feedforward neural network) or MatMul templates, a plurality of activation function templates, a plurality of normalization function templates, and a plurality of SoftMax templates.

7. The system as claimed in claim 5, wherein the one or more transformer-based models comprise of data specific to the one or more transformer-based models including total number of attentions heads, one or more encoder stages, one or more decoder stages, an embedding dimension, a context length, a type of normalization and a type of activation used.

8. The system as claimed in claim 5, wherein the one or more blocks of the one or more transformer-based models comprise of a self-attention block, a normalization block, an activation block, a feed forward neural network block and a SoftMax block.

9. One or more non-transitory machine-readable information storage mediums comprising one or more instructions which when executed by one or more hardware processors cause:

receiving , by a template curator and compiler, a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models, and (v) at least one of a singular feedback mode and a non-feedback mode for the one or more transformer-based models;

constructing, by the template curator and compiler, a plurality of parameterized transformer model templates using the received plurality of input parameters, wherein the plurality of parameterized transformer model templates comprises of a parameterized latency function and a resource utilization function;

receiving, by an optimizer, each of the plurality of parameterized transformer model templates, one or more configurations corresponding to one or more Field Programmable Gate Arrays (FPGAs) and a last template signal, and wherein the last template signal refers to a signal associated with a last template from the plurality of parameterized transformer model templates;

assigning one or more values to each of a plurality of parameters comprised in the plurality of parameterized transformer model templates to obtain a plurality of optimal parameters from the optimizer, using at least one of: (i) the parameterized latency function, which is used as a cost function by the optimizer, and (ii) the resource utilization function along with the received one or more configurations corresponding to the plurality of Field Programmable Gate Arrays (FPGAs), wherein the resource utilization function and the one or more configurations corresponding to the one or more Field Programmable Gate Arrays (FPGAs) are used as resource constraints by the optimizer for minimizing the latency on implementing the plurality of parameterized transformer model templates on one or more Field Programmable Gate Arrays (FPGAs) for achieving a maximum throughput;

feeding, to a final template selector, the plurality of optimal parameters pertaining to each of the plurality of parameterized transformer model templates; and

obtaining, by the final template selector executed via the one or more hardware processors, an optimal template having maximum performance in terms of a low latency and the maximum throughput, from each of the plurality of parameterized transformer model templates.

10. The one or more non-transitory machine-readable information storage mediums as claimed in claim 9, wherein the plurality of templates comprises a plurality of self-attention templates, a plurality of FFNN (feedforward neural network) or MatMul templates, a plurality of activation function templates, a plurality of normalization function templates, and a plurality of SoftMax templates.

11. The one or more non-transitory machine-readable information storage mediums as claimed in claim 9, wherein the one or more transformer-based models comprise of data specific to the one or more transformer-based models including total number of attentions heads, one or more encoder stages, one or more decoder stages, an embedding dimension, a context length, a type of normalization and a type of activation used.

12. The one or more non-transitory machine-readable information storage mediums as claimed in claim 9, wherein the one or more blocks of the one or more transformer-based models comprise of a self-attention block, a normalization block, an activation block, a feed forward neural network block and a SoftMax block.

**Patentansprüche**

1. Prozessorimplementiertes Verfahren (300), umfassend:

Empfangen (302), durch einen Vorlagenkurator und Compiler, der über einen oder mehrere Hardwareprozessoren ausgeführt wird, einer Mehrzahl von Eingangsparametern, umfassend (i) eine Mehrzahl von Vorlagen, die für einen oder mehrere Blöcke eines oder mehrerer transformatorbasierter Modelle spezifisch sind, (ii) das eine oder die mehreren transformatorbasierten Modelle, (iii) einen oder mehrere Datentypen, die dem einen oder den mehreren transformatorbasierten Modellen entsprechen, (iv) eine Tabelle, die einen oder mehrere Latenzwerte und einen oder mehrere Ressourcennutzungswerte umfasst, die einer oder mehreren mathematischen Operationen für jeden des einen oder der mehreren Datentypen entsprechen, die dem einen oder den mehreren transformatorbasierten Modellen entsprechen, und (v) mindestens einen von einem singulären Rückkopplungsmodus und einem Nicht-Rückkopplungsmodus für das eine oder die mehreren transformatorbasierten Modelle;

Konstruieren (304), durch den Vorlagenkurator und Compiler, der über den einen oder die mehreren Hardwareprozessoren ausgeführt wird, einer Mehrzahl von parametrisierten Transformatormodellvorlagen unter Verwendung der empfangenen Mehrzahl von Eingangsparametern, wobei die Mehrzahl von parametrisierten Transformatormodellvorlagen eine parametrisierte Latenzfunktion und eine Ressourcennutzungsfunktion umfasst;

Empfangen (306), durch einen Optimierer, der über den einen oder die mehreren Hardwareprozessoren ausgeführt wird, jeder der Mehrzahl von parametrisierten Transformatormodellvorlagen, einer oder mehrerer Konfigurationen, die einem oder mehreren feldprogrammierbaren Gate-Arrays (FPGAs) entsprechen, und eines letzten Vorlagensignals, und wobei sich das letzte Vorlagensignal auf ein Signal bezieht, das einer letzten Vorlage aus der Mehrzahl von parametrisierten Transformatormodellvorlagen zugeordnet ist;

Zuweisen (308), über den einen oder die mehreren Hardwareprozessoren, eines oder mehrerer Werte zu jedem einer Mehrzahl von Parametern, die in der Mehrzahl von parametrisierten Transformatormodellvorlagen enthalten sind, um eine Mehrzahl von optimalen Parametern von dem Optimierer zu erhalten, unter Verwendung von mindestens einem von: (i) der parametrisierten Latenzfunktion, die als eine Kostenfunktion durch den Optimierer verwendet wird, und (ii) der Ressourcennutzungsfunktion zusammen mit der empfangenen einen oder den empfangenen mehreren Konfigurationen, die der Mehrzahl von feldprogrammierbaren Gate-Arrays (FPGAs) entsprechen, wobei die Ressourcennutzungsfunktion und die eine oder die mehreren Konfigurationen, die dem einen oder den mehreren feldprogrammierbaren Gate-Arrays (FPGAs) entsprechen, als Ressourcenbeschränkungen durch den Optimierer zum Minimieren der Latenz beim Implementieren der Mehrzahl von parametrisierten Transformatormodellvorlagen auf einem oder mehreren feldprogrammierbaren Gate-Arrays (FPGAs) zum Erreichen eines maximalen Durchsatzes verwendet werden;

Zuführen (310), zu einem endgültigen Vorlagenselektor, der über den einen oder die mehreren Hardwareprozessoren ausgeführt wird, der Mehrzahl von optimalen Parametern, die sich auf jede der Mehrzahl von parametrisierten Transformatormodellvorlagen beziehen; und

Erhalten (312), durch den endgültigen Vorlagenselektor, der über den einen oder die mehreren Hardwareprozessoren ausgeführt wird, einer optimalen Vorlage mit maximaler Leistung in Bezug auf eine niedrige Latenz und den maximalen Durchsatz aus jeder der Mehrzahl von parametrisierten Transformatormodellvorlagen.

2. Prozessorimplementiertes Verfahren nach Anspruch 1, wobei die Mehrzahl von Vorlagen eine Mehrzahl von Selbstaufmerksamkeitsvorlagen, eine Mehrzahl von FFNN (feedforward neural network)- oder MatMul-Vorlagen, eine Mehrzahl von Aktivierungsfunktionsvorlagen, eine Mehrzahl von Normalisierungsfunktionsvorlagen und eine Mehrzahl von SoftMax-Vorlagen umfasst.

3. Prozessorimplementiertes Verfahren nach Anspruch 1, wobei das eine oder die mehreren transformatorbasierten Modelle Daten umfassen, die für das eine oder die mehreren transformatorbasierten Modelle spezifisch sind, einschließlich der Gesamtanzahl von Aufmerksamkeitsköpfen, einer oder mehrerer Codiererstufen, einer oder mehrerer Decodiererstufen, einer Einbettungsdimension, einer Kontextlänge, eines Typs der Normalisierung und eines Typs der verwendeten Aktivierung.

4. Prozessorimplementiertes Verfahren nach Anspruch 1, wobei der eine oder die mehreren Blöcke des einen oder der mehreren transformatorbasierten Modelle einen Selbstaufmerksamkeitsblock, einen Normalisierungsblock, einen Aktivierungsblock, einen feedforward neuralen Netzwerkblock und einen SoftMax-Block umfassen.

5. System (100), umfassend:

einen Speicher (104), der Anweisungen speichert;

eine oder mehrere Kommunikationsschnittstellen (112); und

einen oder mehrere Hardwareprozessoren (102), die über die eine oder die mehreren Kommunikationsschnittstellen (112) mit dem Speicher (104) gekoppelt sind, wobei der eine oder die mehreren Hardwareprozessoren (102) durch die Anweisungen konfiguriert sind zum:

Empfangen einer Mehrzahl von Eingangsparametern, umfassend (i) eine Mehrzahl von Vorlagen, die für einen oder mehrere Blöcke eines oder mehrerer transformatorbasierter Modelle spezifisch sind, (ii) das eine oder die mehreren transformatorbasierten Modelle, (iii) einen oder mehrere Datentypen, die dem einen oder den mehreren transformatorbasierten Modellen entsprechen, (iv) eine Tabelle, die einen oder mehrere Latenzwerte und einen oder mehrere Ressourcennutzungswerte umfasst, die einer oder mehreren mathematischen Operationen für jeden des einen oder der mehreren Datentypen entsprechen, die dem einen oder den mehreren transformatorbasierten Modellen entsprechen, und (v) mindestens einen von einem singulären Rückkopplungsmodus und einem Nicht-Rückkopplungsmodus für das eine oder die mehreren transformatorbasierten Modelle;

Konstruieren einer Mehrzahl von parametrisierten Transformatormodellvorlagen unter Verwendung der empfangenen Mehrzahl von Eingangsparametern, wobei die Mehrzahl von parametrisierten Transformatormodellvorlagen eine parametrisierte Latenzfunktion und eine Ressourcennutzungsfunktion umfasst;

Empfangen jeder der Mehrzahl von parametrisierten Transformatormodellvorlagen, einer oder mehrerer Konfigurationen, die einem oder mehreren feldprogrammierbaren Gate-Arrays (FPGAs) entsprechen, und eines letzten Vorlagensignals, und wobei sich das letzte Vorlagensignal auf ein Signal bezieht, das einer letzten Vorlage aus der Mehrzahl von parametrisierten Transformatormodellvorlagen zugeordnet ist;

Zuweisen eines oder mehrerer Werte zu jedem einer Mehrzahl von Parametern, die in der Mehrzahl von parametrisierten Transformatormodellvorlagen enthalten sind, um eine Mehrzahl von optimalen Parametern von dem Optimierer zu erhalten, unter Verwendung von mindestens einem von: (i) der parametrisierten Latenzfunktion, die als eine Kostenfunktion durch den Optimierer verwendet wird, und (ii) der Ressourcennutzungsfunktion zusammen mit der empfangenen einen oder den empfangenen mehreren Konfigurationen, die einem oder mehreren feldprogrammierbaren Gate-Arrays (FPGAs) entsprechen, wobei die Ressourcennutzungsfunktion und die eine oder die mehreren Konfigurationen, die dem einen oder den mehreren feldprogrammierbaren Gate-Arrays (FPGAs) entsprechen, als Ressourcenbeschränkungen durch den Optimierer zum Minimieren der Latenz beim Implementieren der Mehrzahl von parametrisierten Transformatormodellvorlagen auf einem oder mehreren feldprogrammierbaren Gate-Arrays (FPGAs) zum Erreichen eines maximalen Durchsatzes verwendet werden;

Zuführen der Mehrzahl von optimalen Parametern, die sich auf jede der Mehrzahl von parametrisierten Transformatormodellvorlagen beziehen; und

Erhalten einer optimalen Vorlage mit maximaler Leistung in Bezug auf eine niedrige Latenz und den maximalen Durchsatz aus jeder der Mehrzahl von parametrisierten Transformatormodellvorlagen.

6. System nach Anspruch 5, wobei die Mehrzahl von Vorlagen eine Mehrzahl von Selbstaufmerksamkeitsvorlagen, eine Mehrzahl von FFNN (feedforward neural network)- oder MatMul-Vorlagen, eine Mehrzahl von Aktivierungsfunktionsvorlagen, eine Mehrzahl von Normalisierungsfunktionsvorlagen und eine Mehrzahl von SoftMax-Vorlagen umfasst.

7. System nach Anspruch 5, wobei das eine oder die mehreren transformatorbasierten Modelle Daten umfassen, die für das eine oder die mehreren transformatorbasierten Modelle spezifisch sind, einschließlich der Gesamtanzahl von Aufmerksamkeitsköpfen, einer oder mehrerer Codiererstufen, einer oder mehrerer Decodiererstufen, einer Einbettungsdimension, einer Kontextlänge, eines Typs der Normalisierung und eines Typs der verwendeten Aktivierung.

8. System nach Anspruch 5, wobei der eine oder die mehreren Blöcke des einen oder der mehreren transformatorbasierten Modelle einen Selbstaufmerksamkeitsblock, einen Normalisierungsblock, einen Aktivierungsblock, einen feedforward neuralen Netzwerkblock und einen SoftMax-Block umfassen.

9. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:

Empfangen, durch einen Vorlagenkurator und Compiler, einer Mehrzahl von Eingangsparametern, umfassend (i) eine Mehrzahl von Vorlagen, die für einen oder mehrere Blöcke eines oder mehrerer transformatorbasierter Modelle spezifisch sind, (ii) das eine oder die mehreren transformatorbasierten Modelle, (iii) einen oder mehrere Datentypen, die dem einen oder den mehreren transformatorbasierten Modellen entsprechen, (iv) eine Tabelle, die einen oder mehrere Latenzwerte und einen oder mehrere Ressourcennutzungswerte umfasst, die einer oder mehreren mathematischen Operationen für jeden des einen oder der mehreren Datentypen entsprechen, die dem einen oder den mehreren transformatorbasierten Modellen entsprechen, und (v) mindestens einen von einem singulären Rückkopplungsmodus und einem Nicht-Rückkopplungsmodus für das eine oder die mehreren transformatorbasierten Modelle;

Konstruieren, durch den Vorlagenkurator und Compiler, einer Mehrzahl von parametrisierten Transformatormodellvorlagen unter Verwendung der empfangenen Mehrzahl von Eingangsparametern, wobei die Mehrzahl von parametrisierten Transformatormodellvorlagen eine parametrisierte Latenzfunktion und eine Ressourcennutzungsfunktion umfasst;

Empfangen, durch einen Optimierer, jeder der Mehrzahl von parametrisierten Transformatormodellvorlagen, einer oder mehrerer Konfigurationen, die einem oder mehreren feldprogrammierbaren Gate-Arrays (FPGAs) entsprechen, und eines letzten Vorlagensignals, und wobei sich das letzte Vorlagensignal auf ein Signal bezieht, das einer letzten Vorlage aus der Mehrzahl von parametrisierten Transformatormodellvorlagen zugeordnet ist;

Zuweisen eines oder mehrerer Werte zu jedem einer Mehrzahl von Parametern, die in der Mehrzahl von parametrisierten Transformatormodellvorlagen enthalten sind, um eine Mehrzahl von optimalen Parametern von dem Optimierer zu erhalten, unter Verwendung von mindestens einem von: (i) der parametrisierten Latenzfunktion, die als eine Kostenfunktion durch den Optimierer verwendet wird, und (ii) der Ressourcennutzungsfunktion zusammen mit der empfangenen einen oder den empfangenen mehreren Konfigurationen, die der Mehrzahl von feldprogrammierbaren Gate-Arrays (FPGAs) entsprechen, wobei die Ressourcennutzungsfunktion und die eine oder die mehreren Konfigurationen, die dem einen oder den mehreren feldprogrammierbaren Gate-Arrays (FPGAs) entsprechen, als Ressourcenbeschränkungen durch den Optimierer zum Minimieren der Latenz beim Implementieren der Mehrzahl von parametrisierten Transformatormodellvorlagen auf einem oder mehreren feldprogrammierbaren Gate-Arrays (FPGAs) zum Erreichen eines maximalen Durchsatzes verwendet werden; Zuführen, zu einem endgültigen Vorlagenselektor, der Mehrzahl von optimalen Parametern, die sich auf jede der Mehrzahl von parametrisierten Transformatormodellvorlagen beziehen; und

Erhalten, durch den endgültigen Vorlagenselektor, der über den einen oder die mehreren Hardwareprozessoren ausgeführt wird, einer optimalen Vorlage mit maximaler Leistung in Bezug auf eine niedrige Latenz und den maximalen Durchsatz aus jeder der Mehrzahl von parametrisierten Transformatormodellvorlagen.

10. Ein oder mehrere nichtflüchtige maschinenlesbare Informationsspeichermedien nach Anspruch 9, wobei die Mehrzahl von Vorlagen eine Mehrzahl von Selbstaufmerksamkeitsvorlagen, eine Mehrzahl von FFNN (feedforward neural network)- oder MatMul-Vorlagen, eine Mehrzahl von Aktivierungsfunktionsvorlagen, eine Mehrzahl von Normalisierungsfunktionsvorlagen und eine Mehrzahl von SoftMax-Vorlagen umfasst.

11. Ein oder mehrere nichtflüchtige maschinenlesbare Informationsspeichermedien nach Anspruch 9, wobei das eine oder die mehreren transformatorbasierten Modelle Daten umfassen, die für das eine oder die mehreren transformatorbasierten Modelle spezifisch sind, einschließlich der Gesamtanzahl von Aufmerksamkeitsköpfen, einer oder mehrerer Codiererstufen, einer oder mehrerer Decodiererstufen, einer Einbettungsdimension, einer Kontextlänge, eines Typs der Normalisierung und eines Typs der verwendeten Aktivierung.

12. Ein oder mehrere nichtflüchtige maschinenlesbare Informationsspeichermedien nach Anspruch 9, wobei der eine oder die mehreren Blöcke des einen oder der mehreren transformatorbasierten Modelle einen Selbstaufmerksamkeitsblock, einen Normalisierungsblock, einen Aktivierungsblock, einen feedforward neuralen Netzwerkblock und einen SoftMax-Block umfassen.

## Revendications

1. Procédé mis en œuvre par processeur (300), comprenant :

la réception (302), par un conservateur et compilateur de modèles exécutés via un ou plusieurs processeurs matériels, d'une pluralité de paramètres d'entrée comprenant (i) une pluralité de modèles spécifiques à un ou plusieurs blocs d'un ou plusieurs modèles à base de transformateurs, (ii) les un ou plusieurs modèles à base de transformateurs, (iii) un ou plusieurs types de données correspondant aux un ou plusieurs modèles à base de transformateurs, (iv) une table comprenant une ou plusieurs valeurs de latence et une ou plusieurs valeurs d'utilisation de ressources correspondant à une ou plusieurs opérations mathématiques pour chacun des un ou plusieurs types de données correspondant aux un ou plusieurs modèles à base de transformateurs, et (v) au moins l'un d'un mode de rétroaction singulier et d'un mode sans rétroaction pour les un ou plusieurs modèles à base de transformateurs ;

la construction (304), par le conservateur et compilateur de modèles exécuté via les un ou plusieurs processeurs matériels, d'une pluralité de modèles de modèle de transformateurs paramétrés en utilisant la pluralité reçue de paramètres d'entrée, dans lequel la pluralité de modèles de modèle de transformateurs paramétrés comprend une fonction de latence paramétrée et une fonction d'utilisation de ressources ;

la réception (306), par un optimiseur exécuté via les un ou plusieurs processeurs matériels, de chacun de la pluralité de modèles de modèle de transformateurs paramétrés, d'une ou plusieurs configurations correspondant à un ou plusieurs réseaux de portes programmables in situ (FPGA) et d'un dernier signal de modèle, et dans lequel le dernier signal de modèle fait référence à un signal associé à un dernier modèle de la pluralité de modèles de modèle de transformateurs paramétrés ;

l'attribution (308), via les un ou plusieurs processeurs matériels, d'une ou plusieurs valeurs à chacun d'une pluralité de paramètres compris dans la pluralité de modèles de modèle de transformateurs paramétrés pour obtenir une pluralité de paramètres optimaux à partir de l'optimiseur, en utilisant au moins l'un parmi : (i) la fonction de latence paramétrée, qui est utilisée comme une fonction de coût par l'optimiseur, et (ii) la fonction d'utilisation de ressources avec les une ou plusieurs configurations reçues correspondant à la pluralité de réseaux de portes programmables in situ (FPGA), dans lequel la fonction d'utilisation de ressources et les une ou plusieurs configurations correspondant aux un ou plusieurs réseaux de portes programmables in situ (FPGA) sont utilisées comme contraintes de ressources par l'optimiseur pour minimiser la latence lors de la mise en œuvre de la pluralité de modèles de modèle de transformateurs paramétrés sur un ou plusieurs réseaux de portes programmables in situ (FPGA) pour atteindre un débit maximal ;

la fourniture (310), à un sélecteur de modèle final exécuté via les un ou plusieurs processeurs matériels, de la pluralité de paramètres optimaux se rapportant à chacun de la pluralité de modèles de modèle de transformateurs paramétrés ; et

l'obtention (312), par le sélecteur de modèle final exécuté via les un ou plusieurs processeurs matériels, d'un modèle optimal ayant une performance maximale en termes d'une faible latence et du débit maximal, à partir de chacun de la pluralité de modèles de modèle de transformateurs paramétrés.

2. Procédé mis en œuvre par processeur selon la revendication 1, dans lequel la pluralité de modèles comprend une pluralité de modèles d'auto-attention, une pluralité de modèles FFNN (réseau neuronal à action directe) ou MatMul, une pluralité de modèles de fonction d'activation, une pluralité de modèles de fonction de normalisation, et une pluralité de modèles SoftMax.

3. Procédé mis en œuvre par processeur selon la revendication 1, dans lequel les un ou plusieurs modèles à base de transformateurs comprennent des données spécifiques aux un ou plusieurs modèles à base de transformateurs incluant un nombre total de têtes d'attention, un ou plusieurs étages de codeur, un ou plusieurs étages de décodeur, une dimension d'intégration, une longueur de contexte, un type de normalisation et un type d'activation utilisés.

4. Procédé mis en œuvre par processeur selon la revendication 1, dans lequel les un ou plusieurs blocs des un ou plusieurs modèles à base de transformateurs comprennent un bloc d'auto-attention, un bloc de normalisation, un bloc d'activation, un bloc de réseau neuronal à action directe et un bloc SoftMax.

5. Système (100), comprenant :

une mémoire (104) stockant des instructions ;
une ou plusieurs interfaces de communication (112) ; et
un ou plusieurs processeurs matériels (102) couplés à la mémoire (104) via les une ou plusieurs interfaces de communication (112), dans lequel les un ou plusieurs processeurs matériels (102) sont configurés par les instructions pour :

recevoir une pluralité de paramètres d'entrée comprenant (i) une pluralité de modèles spécifiques à un ou plusieurs blocs d'un ou plusieurs modèles à base de transformateurs, (ii) les un ou plusieurs modèles à base de transformateurs, (iii) un ou plusieurs types de données correspondant aux un ou plusieurs modèles à base de transformateurs, (iv) une table comprenant une ou plusieurs valeurs de latence et une ou plusieurs valeurs d'utilisation de ressources correspondant à une ou plusieurs opérations mathématiques pour chacun des un ou plusieurs types de données correspondant aux un ou plusieurs modèles à base de transformateurs, et (v) au moins l'un d'un mode de rétroaction singulier et d'un mode sans rétroaction pour les un ou plusieurs modèles à base de transformateurs ;
construire une pluralité de modèles de modèle de transformateurs paramétrés en utilisant la pluralité reçue de paramètres d'entrée, dans lequel la pluralité de modèles de modèle de transformateurs paramétrés comprend une fonction de latence paramétrée et une fonction d'utilisation de ressources ;
recevoir chacun de la pluralité de modèles de modèle de transformateurs paramétrés, une ou plusieurs configurations correspondant à un ou plusieurs réseaux de portes programmables in situ (FPGA) et un dernier signal de modèle, et dans lequel le dernier signal de modèle fait référence à un signal associé à un dernier modèle de la pluralité de modèles de modèle de transformateurs paramétrés ;
attribuer une ou plusieurs valeurs à chacun d'une pluralité de paramètres compris dans la pluralité de modèles de modèle de transformateurs paramétrés pour obtenir une pluralité de paramètres optimaux à partir de l'optimiseur, en utilisant au moins l'un de : (i) la fonction de latence paramétrée, qui est utilisée en tant que fonction de coût par l'optimiseur, et (ii) la fonction d'utilisation de ressources avec les une ou plusieurs configurations reçues correspondant à un ou plusieurs réseaux de portes programmables in situ (FPGA), dans lequel la fonction d'utilisation de ressources et les une ou plusieurs configurations correspondant aux un ou plusieurs réseaux de portes programmables in situ (FPGA) sont utilisées en tant que contraintes de ressources par l'optimiseur pour minimiser la latence lors de la mise en œuvre de la pluralité de modèles de modèle de transformateurs paramétrés sur un ou plusieurs réseaux de portes programmables in situ (FPGA) pour atteindre un débit maximal ;
fournir la pluralité de paramètres optimaux se rapportant à chacun de la pluralité de modèles de modèle de transformateurs paramétrés ; et
obtenir un modèle optimal ayant une performance maximale en termes d'une faible latence et du débit maximal, à partir de chacun de la pluralité de modèles de modèle de transformateurs paramétrés.

6. Système selon la revendication 5, dans lequel la pluralité de modèles comprend une pluralité de modèles d'auto-attention, une pluralité de modèles FFNN (réseau neuronal à action directe) ou MatMul, une pluralité de modèles de fonction d'activation, une pluralité de modèles de fonction de normalisation, et une pluralité de modèles SoftMax.

7. Système selon la revendication 5, dans lequel les un ou plusieurs modèles à base de transformateurs comprennent des données spécifiques aux un ou plusieurs modèles à base de transformateurs incluant un nombre total de têtes d'attention, un ou plusieurs étages de codeur, un ou plusieurs étages de décodeur, une dimension d'intégration, une longueur de contexte, un type de normalisation et un type d'activation utilisés.

8. Système selon la revendication 5, dans lequel les un ou plusieurs blocs des un ou plusieurs modèles à base de transformateurs comprennent un bloc d'auto-attention, un bloc de normalisation, un bloc d'activation, un bloc de réseau neuronal à action directe et un bloc SoftMax.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception, par un conservateur et compilateur de modèles, d'une pluralité de paramètres d'entrée comprenant (i) une pluralité de modèles spécifiques à un ou plusieurs blocs d'un ou plusieurs modèles à base de transformateurs, (ii) les un ou plusieurs modèles à base de transformateurs, (iii) un ou plusieurs types de données correspondant aux un ou plusieurs modèles à base de transformateurs, (iv) une table comprenant une ou plusieurs valeurs de latence et une ou plusieurs valeurs d'utilisation de ressources correspondant à une ou plusieurs opérations mathématiques pour chacun des un ou plusieurs types de données correspondant aux un ou plusieurs modèles à base de transformateurs, et (v) au moins l'un d'un mode de rétroaction singulier et d'un mode sans rétroaction pour les un ou plusieurs modèles à base de transformateurs ;
la construction, par le conservateur et compilateur de modèles, d'une pluralité de modèles de modèle de transformateurs paramétrés en utilisant la pluralité reçue de paramètres d'entrée, dans lequel la pluralité de modèles de modèle de transformateurs paramétrés comprend une fonction de latence paramétrée et une fonction d'utilisation de ressources ;
la réception, par un optimiseur, de chacun de la pluralité de modèles de modèle de transformateurs paramétrés, d'une ou plusieurs configurations correspondant à un ou plusieurs réseaux de portes programmables in situ (FPGA) et d'un dernier signal de modèle, et dans lequel le dernier signal de modèle fait référence à un signal associé à un dernier modèle de la pluralité de modèles de modèle de transformateurs paramétrés ;
l'attribution d'une ou plusieurs valeurs à chacun d'une pluralité de paramètres compris dans la pluralité de modèles de modèle de transformateurs paramétrés pour obtenir une pluralité de paramètres optimaux à partir de l'optimiseur, en utilisant au moins l'un de : (i) la fonction de latence paramétrée, qui est utilisée en tant que fonction de coût par l'optimiseur, et (ii) la fonction d'utilisation de ressources avec les une ou plusieurs configurations reçues correspondant à la pluralité de réseaux de portes programmables in situ (FPGA), dans lequel la fonction d'utilisation de ressources et les une ou plusieurs configurations correspondant aux un ou plusieurs réseaux de portes programmables in situ (FPGA) sont utilisées en tant que contraintes de ressources par l'optimiseur pour minimiser la latence lors de la mise en œuvre de la pluralité de modèles de modèle de transformateurs paramétrés sur un ou plusieurs réseaux de portes programmables in situ (FPGA) pour atteindre un débit maximal ;
la fourniture, à un sélecteur de modèle final, de la pluralité de paramètres optimaux se rapportant à chacun de la pluralité de modèles de modèle de transformateurs paramétrés ; et
l'obtention, par le sélecteur de modèle final exécuté via les un ou plusieurs processeurs matériels, d'un modèle optimal ayant une performance maximale en termes d'une faible latence et du débit maximal, à partir de chacun de la pluralité de modèles de modèle de transformateurs paramétrés.

10. Un ou plusieurs supports de stockage d'informations lisibles par machine non transitoires selon la revendication 9, dans lequel la pluralité de modèles comprend une pluralité de modèles d'auto-attention, une pluralité de modèles FFNN (réseau neuronal à action directe) ou MatMul, une pluralité de modèles de fonction d'activation, une pluralité de modèles de fonction de normalisation, et une pluralité de modèles SoftMax.

11. Un ou plusieurs supports de stockage d'informations lisibles par machine non transitoires selon la revendication 9, dans lequel les un ou plusieurs modèles à base de transformateurs comprennent des données spécifiques aux un ou plusieurs modèles à base de transformateurs incluant un nombre total de têtes d'attention, un ou plusieurs étages de codeur, un ou plusieurs étages de décodeur, une dimension d'intégration, une longueur de contexte, un type de normalisation et un type d'activation utilisés.

12. Un ou plusieurs supports de stockage d'informations lisibles par machine non transitoires selon la revendication 9, dans lequel les un ou plusieurs blocs des un ou plusieurs modèles à base de transformateurs comprennent un bloc d'auto-attention, un bloc de normalisation, un bloc d'activation, un bloc de réseau neuronal à action directe et un bloc SoftMax.

**FIG. 1**

Self Attention
Template module 212

FFNN or MatMul
Template module 214

Activation Function
Template module 216

Normalization
Function Template
module 218

SoftMax Template module
220

Templates module 202

Number
of
FPGA's

FPGA
Configuration

Feedback
Mode

Transformer
model

Data type

Template Curator and
Compiler module 204

Selected template for
the model with
parameterized latency
and functions

Optimizer 208

Optimal
parameters
for the
template

Final Template
Selector module
210

Final
template for
optimal
model
development

Operator latency and
resource utilization table
206

Operator Utilization
and latency functions

Last template
signal

**FIG. 2**

receiving by a template Curator and compiler executed by one or more hardware processors, a plurality of input parameters comprising (i) a plurality of templates specific to one or more blocks of one or more transformer-based models, (ii) the one or more transformer-based models, (iii) one or more data types corresponding to the one or more transformer-based models, (iv) a table comprising one or more latency values and one or more resource utilization values corresponding to one or more mathematical operations for each of the one or more data types corresponding to the one or more transformer-based models (v) at least one of a singular feedback mode and a non-feedback mode for the one or more transformer-based models

302

constructing by a template Curator and compiler executed the by one or more hardware processors, a plurality of parameterized transformer model templates using the received plurality of input parameters, wherein the plurality of parameterized transformer model templates comprises of a parameterized latency function and a resource utilization function

304

receiving by an optimizer executed by the one or more hardware processors, each of the plurality of parameterized transformer model templates, one or more configurations corresponding to a plurality of Field Programmable Gate Arrays (FPGAs) and a last template signal, and wherein the last template signal refers to a signal associated with a last template from the plurality of parameterized transformer model templates

306

300

A

**FIG. 3A**

A

assigning by the one or more hardware processor, one or more values to each of a plurality of parameters comprised in the plurality of parameterized transformer model templates to obtain a plurality of optimal parameters from the optimizer, using at least one of:

    (i) the parameterized latency function, which is used as a cost function by the optimizer; and (ii) the resource utilization function along with the received one or more configurations corresponding to the plurality of Field Programmable Gate Arrays (FPGAs), wherein the resource utilization function and the one or more configurations corresponding to the one or more Field Programmable Gate Arrays (FPGAs) are used as resource constraints by the optimizer for minimizing the latency on implementing the plurality of parameterized transformer model templates on one or more Field Programmable Gate Arrays (FPGAs) for achieving max throughput for achieving a maximum throughput

308

feeding to a final template selector executed by the one or more hardware processors, the plurality of optimal parameters pertaining to each of the plurality of parameterized transformer model templates

310

obtaining by the final template selector executed by the one or more hardware processors, an optimal template having maximum performance in terms of a low latency and the maximum throughput, from each of the plurality of parameterized transformer model templates.

312

300

FIG. 3B

FIG. 4

FIG. 5A

FIG. 5B

FIG. 6A

Self-Attention

wire
bus

n9 such units

Path 1

L

M

x
x
⋮
x

n3

Adder
Tree

Buffer
[PerHead
/n3]

[PerHead
/n3]

Adder
Tree

Div

Exp

Exp Buffer
[Max_Ctx]

Exp
Buffer

sqrt(Embd)

Path 2

v buffer

O

x
x
⋮
x

n6

Adder
Tree

Buffer
[Max_
Ctx/n6]

[Max_
Ctx/n6]

Adder
Tree

A

**FIG. 6B**

**FIG. 7**

FIG. 8

n9 such
units

wire

bus

Adder
Tree

n1

Buffer
[Embd/n1]

Adder
Tree

[Embd
/n1]

Embd

h

Div

n2

Sub

h-uh buffer

n2

Mul

buffer
[Embd]

L

FIG. 9A

**FIG. 9B**

**FIG. 10A**

FIG. 10B

**FIG. 10C**

**FIG. 10D**

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321083523

**Non-patent literature cited in the description**

- **P. PLAGWITZ** ; **F. HANNIG** ; **J. TEICH**. TRAC: Compilation-Based Design of Transformer Accelerators for FPGAs. *2022 32nd International Conference on Field-Programmable Logic and Applications (FPL), Belfast, United Kingdom*, 2022, 17-23